# EUROPÄISCHE PATENTSCHRIFT

(11) **EP 2 907 708 B1**
(45) Veröffentlichungstag und Bekanntmachung des Hinweises auf die Patenterteilung: **25.01.2017**
(21) Anmeldenummer: 15155365.8
(22) Anmeldetag: 17.02.2015
(51) Int. Cl.: B60S 9/06

(54) **Verfahren zum Ansteuern eines Antriebssystems und Steuergerät für ein Antriebssystem**
Method for controlling a drive system and control unit for a drive system
Procédé de commande d'un système d'entraînement et appareil de commande pour un système d'entraînement

(30) Priorität: 17.02.2014 EP 14155465
(43) Veröffentlichungstag der Anmeldung: 19.08.2015
(73) Patentinhaber: Voithofer, Paul, 4400 Steyr (AT)
(72) Erfinder: Voithofer, MBA, Magister Paul, 4400 Steyr (AT); Frühwirth, BA, Paul, 4310 Mauthausen (AT)
(74) Vertreter: Hoefer & Partner Patentanwälte mbB

(56) Entgegenhaltungen:
- EP-A1- 2 479 075
- WO-A1-02/24499
- WO-A1-2012/155280
- DE-U1- 29 724 436
- US-A1- 2008 315 538

## Beschreibung

Die vorliegende Erfindung betrifft ein Verfahren zum Ansteuern eines Antriebssystems. Außerdem betrifft die Erfindung ein Steuergerät für das Antriebssystem. Schließlich betrifft die Erfindung eine Verfahren zum Ansteuern des Antriebssystems sowie ein entsprechendes Computerprogrammprodukt.

Ein Wohnwagen oder ein Wohnmobil sollen an einem Campingplatz völlig eben stehen, um einen größtmöglichen Komfort zu gewährleisten. Dazu sind an Wohnwägen oder Wohnmobilen zumeist Stützen angebracht, mit denen eine Ausrichtung des Wohnwagens oder Wohnmobils einstellbar ist.

Aus der WO 2012/155280 A1 ist eine Gerätestütze bekannt, die über eine Steuerung angesteuert wird. Die Gerätestütze benötigt einen aufwändigen mechanischen Freilauf um ein Verspannen des Spindelantriebs in einer Endlage der Gerätestütze zu vermeiden.

Dokument EP 2 479 075 A offenbart ein Verfahren zum Ansteuern eines Antriebssystems gemäß das erste Teil des Anspruchs 1 und ein Steuergerät gemäß das erste Teil des Anspruchs 10.

Es ist daher Aufgabe der Erfindung, ein Verfahren zum Ansteuern eines Antriebssystems sowie ein Steuergerät für ein Antriebssystem bereitzustellen, wobei mit dem Antriebssystem ein sich in Endlagen verspannendes Kraftübertragungssystem antreibbar ist, und wobei das Verfahren und das Steuergerät bei einfacher Anwendbarkeit und kostengünstiger Herstellbarkeit einen sicheren und zuverlässigen Betrieb des Antriebssystems ermöglichen. Insbesondere soll eine unlösbare Verspannung des Kraftübertragungssystems vermieden werden, die dann auftritt, wenn eine Verspannung des Kraftübertragungssystems von dem Antriebssystem selbst nicht mehr gelöst werden kann.

Die Aufgabe wird gelöst durch ein Verfahren zum Ansteuern zumindest eines Antriebssystems, wobei mit dem Antriebssystem ein in einer Endlage verspannbares Kraftübertragungssystem antreibbar ist. Das erfindungsgemäße Verfahren ist durch die folgenden Schritte gekennzeichnet: Zunächst erfolgt ein Erfassen einer Leistungsaufnahme des Antriebssystems aus einer Energieversorgung, wobei die Leistungsaufnahme während eines stationären Betriebs des Antriebssystems innerhalb eines Toleranzbereichs liegt. Die Leistungsaufnahme wird insbesondere durch einen elektrischen Strom bei konstanter elektrischer Spannung repräsentiert. Somit erfolgt bevorzugt eine Messung des fließenden elektrischen Stroms. Der Toleranzbereich ist insbesondere ein symmetrischer Bereich rund um einen Nennwert, bei dem das Antriebssystem stationär betreibbar ist. Als nächster Schritt erfolgt ein Aufnehmen eines Verlaufs der erfassten Leistungsaufnahme des Antriebssystems über eine Betriebszeit des Antriebssystems. So sind historische Werte bekannt, sodass insbesondere bestimmt werden kann, ob die Leistungsaufnahme ansteigt oder absinkt. Schließlich erfolgt ein Trennen der Energieversorgung von dem Antriebssystem, wodurch das Antriebssystem abgeschaltet oder deaktiviert wird, wenn zumindest eine Abschaltbedingung erfüllt ist. Eine Abschaltbedingung ist erfüllt, wenn die Leistungsaufnahme einen Abschaltwertwert erreicht oder überschreitet. Der Abschaltwert ist ein vordefinierter Wert für eine Leistungsaufnahme, der unterhalb einer Maximalleistung liegt, die das Antriebssystem maximal aufnehmen kann. Dabei ist vorgesehen, dass eine Differenz zwischen Abschaltwert und Maximalleistung größer als eine zum Überwinden der Haftreibung des Kraftübertragungssystems zusätzlich benötigte Leistungsspitze ist. Da nach dem Abschalten insbesondere das Kraftübertragungssystem zur Ruhe kommt, muss für ein erneutes Bewegen des Kraftübertragungssystems durch das Antriebssystem die Haftreibung überwunden werden. Die Haftreibung ist größer als die Gleitreibung, sodass zunächst eine höhere Leistung als die Abschaltleistung benötigt wird, um das Kraftübertragungssystem entweder weiter zu verspannen oder zu lösen. Kann diese Leistungsspitze nicht aufgebracht werden, was bedeutet, dass die Differenz zwischen Maximalleistung und Abschaltleistung kleiner als die Leistungsspitze ist, so liegt eine unlösbare Verspannung des Kraftübertragungssystems vor. In diesem Fall muss ein Benutzer eingreifen, um die Verspannung zu lösen. Daher wird die Gefahr einer unlösbaren Verspannung durch entsprechende Wahl des Abschaltwertes vermieden.

Ebenso wird die Aufgabe gelöst durch die Merkmale des Anspruchs 10. Somit wird die Aufgabe gelöst durch ein Steuergerät für ein Antriebssystem, wobei mit dem Antriebssystem ein in einer Endlage verspannbares Kraftübertragungssystem antreibbar ist. Mit dem Steuergerät ist eine Leistungsaufnahme des Antriebssystems aus einer Energieversorgung erfassbar. Die Leistung liegt dabei während eines stationären Betriebs des Antriebssystems innerhalb eines Toleranzbereichs. Weiterhin ist mit dem Steuergerät ein Verlauf der erfassten Leistungsaufnahme des Antriebssystems über eine Betriebszeit des Antriebssystems aufnehmbar. Somit sind dem Steuergerät historische Werte über die Leistungsaufnahme bekannt. Dies ermöglicht einen Vergleich der historischen Werte mit einem aktuellen Wert, so dass durch das Steuergerät feststellbar ist, ob die Leistungsaufnahme steigt oder sinkt. Mit dem Steuergerät ist die Energieversorgung von dem Antriebssystem trennbar, wenn zumindest eine Abschaltbedingung erfüllt ist. Somit ist das Antriebssystem insbesondere durch das Steuergerät einschaltbar und ausschaltbar oder aktivierbar und deaktivierbar. Eine Abschaltbedingung ist erfüllt, wenn die Leistungsaufnahme einen Abschaltwertwert erreicht oder überschreitet. Dabei ist vorgesehen, dass der Abschaltwert unterhalb einer Maximalleistung liegt, die das Antriebssystem maximal aufnehmen kann. Ebenso ist vorgesehen, dass eine Differenz zwischen Abschaltwert und Maximalleistung größer als eine zum Überwinden der Haftreibung des Antriebssystems zusätzlich benötigte Leistungsspitze ist. Wie zuvor bereits erklärt wurde, ist somit die Gefahr einer unlösbaren Verspannung des von dem Antriebssystem angetriebenen Kraftübertragungssystems vermieden. Besonders vorteilhaft ist mit dem Steuergerät das beschriebene Verfahren ausführbar.

Die Unteransprüche haben bevorzugte Weiterbildungen der Erfindung zum Inhalt.

Bevorzugt ist vorgesehen, dass eine Abschaltbedingung erfüllt ist, wenn aus dem Verlauf der erfassten Leistungsaufnahmen ein Anstieg der Leistungsaufnahme erkennbar ist und die Leistungsaufnahme über dem Abschaltwert liegt. In diesem Fall ist davon auszugehen, dass sich das Kraftübertragungssystem bereits in einer Endlage befindet, wobei die weiter ansteigende Leistung eine weiter ansteigende Verspannung bedeutet. Die Abschaltbedingung verhindert somit die Gefahr einer unlösbaren Verspannung.

Vorteilhafterweise wird eine Leistungsspitze in dem Verlauf erkannt, wenn innerhalb eines vordefinierten Zeitraums die Leistungsaufnahme ansteigt und unmittelbar darauf wieder abfällt. Die Leistungsspitze entsteht während des Überwindens von Haftreibung. Da die Haftreibung größer als die Gleitreibung ist, muss zum Beschleunigen des Kraftübertragungssystems zunächst eine erhöhte Leistung aufgebracht werden, bis die Haftreibung überwunden ist und die Gleitreibung einsetzt. In dem Verlauf der aufgenommen Leistung des Antriebssystems ist dies als Leistungsspitze erkennbar. Bevorzugt bleibt die Leistungsspitze für die Bestimmung, ob eine Abschaltbedingung vorliegt, unberücksichtigt. Beispielsweise wird eine Abschaltbedingung nicht erfüllt, wenn die Leistung aufgrund der Leistungsspitze über der Abschaltleistung liegt und ansteigt.

In einer bevorzugten Ausführungsform der Erfindung erfolgt vor dem Trennen der Energieversorgung von dem Antriebssystem ein invertierter Betrieb des Antriebssystems.

Somit wird bei Vorliegen einer Abschaltbedingung die Energieversorgung nicht unmittelbar getrennt, sondern zunächst durch den invertierten Betrieb das Kraftübertragungssystem entspannt. Somit ist insbesondere vorgesehen, dass das Kraftübertragungssystem nicht in einem verspannten oder zumindest in einem nur leicht verspannten Zustand verbleibt, wenn das Antriebssystem abgeschaltet ist. Auf diese Weise ist die Gefahr einer unlösbaren Verspannung auch im Falle der Fehlbedienung des Antriebssystems vermieden oder zumindest vermindert. Der invertierte Betrieb und damit das Entspannen erfolgt bevorzugt über einen vordefinierten Entspannungszeitraum.

Alternativ ist bevorzugt vorgesehen, dass der zuvor beschriebene invertierte Betrieb des Antriebssystems und damit das Entspannen des Kraftübertragungssystems erfolgt, bis die Leistungsaufnahme innerhalb des Toleranzbereichs liegt. Der Toleranzbereich entspricht derjenigen Leistung, die zum stationären Betrieb des Antriebssystems erforderlich ist. Somit liegt keine Verspannung oder nur eine minimale Verspannung vor, wodurch die Gefahr einer unlösbaren Verspannung weiter gemindert ist.

Vorteilhafterweise ist vorgesehen, dass aus dem Steuergerät die Rechenlogik in ein Benutzer-Endgerät ausgelagert ist. Mit dem Benutzer-Endgerät ist das Steuergerät bevorzugt steuerbar. Dann werden bevorzugt die folgenden Schritte ausgeführt: Zunächst erfolgt vorteilhafterweise ein Verbinden eines Benutzer-Endgeräts mit dem Steuergerät, das mit dem Antriebssystem verbunden ist. Durch das Steuergerät ist die Energieversorgung mit dem Antriebssystem insbesondere verbindbar und/oder trennbar. Anschließend erfolgt ein Ausgeben, insbesondere ein wiederholtes Ausgeben, zumindest eines Steuersignals für die Antriebsvorrichtung von dem Benutzer-Endgerät an das Steuergerät.

Die Verbindung des Benutzer-Endgeräts mit dem Steuergerät ist insbesondere deshalb notwendig, da insbesondere vorgesehen ist, dass lediglich das Benutzer-Endgerät die relevanten Steuersignale erzeugt. Dabei wird ein Steuersignal für die Antriebsvorrichtung von dem Benutzer-Endgerät generiert und an das Steuergerät ausgegeben. Dies geschieht vorteilhafterweise aufgrund eines Befehls durch eine Eingabe eines Benutzers oder ist das Ergebnis einer übergeordneten Regelung. Schließlich wird eine Leistungsaufnahme des Antriebssystems, die durch das Steuergerät erfasst wurde, von dem Benutzer-Endgerät empfangen. Dadurch stehen dem Benutzer-Endgerät jederzeit aktuelle Werte über die Leistungsaufnahme des angesteuerten Antriebssystems sowie insbesondere ein Verlauf der erfassten Leistungsaufnahme des Antriebssystems über eine Betriebszeit des Antriebssystems zur Verfügung. Dabei ist eine Betriebszeit insbesondere eine Zeit des Betriebs beginnend mit dem Verfahren aus einer Ruhestellung, also z.B. von einem ausgefahrenen Zustand in den eingefahrenen Zustand bis zum Abschluss einer jeweiligen Aktion. Daher erfolgt durch das Benutzer-Endgerät eine Überprüfung der Leistungsaufnahme, wobei das Benutzer-Endgerät das Antriebssystem deaktiviert, wenn eine Abschaltbedingung vorliegt. Das Deaktivieren erfolgt durch die Übertragung eines Steuersignals an das Steuergerät, mit dem die Energieversorgung von dem Antriebssystem getrennt wird. Auf diese Weise wird einerseits eine Überlastung des Antriebssystems verhindert, andererseits wird durch rechtzeitiges Abschalten des Antriebssystems sichergestellt, dass ausreichend Reserven vorhanden sind, um eine zum Überwinden einer Haftreibung nötige Leistungsspitze bereitzustellen. Somit wird eine unlösbare Verspannung vermieden. Insbesondere bei Verwendung des Antriebssystems zum Bewegen einer Stütze der Plattform ist somit keine aufwändige Gestaltung der Stütze notwendig, um ein Verklemmen der Stütze in einer Endlage zu vermeiden.

Besonders vorteilhaft ermöglichen die eingangs beschriebenen Komponenten und Verfahrensschritte die Nivellierung der Plattform, wobei mit dem Antriebssystem zumindest eine ausfahrbare Stütze der Plattform ausfahrbar und/oder einfahrbar ist, indem die folgenden zusätzlichen Schritte ausgeführt werden: Zunächst wird durch das Benutzer-Endgerät eine Ziellage der Plattform relativ zu einem Untergrund des Fahrzeugs bestimmt. Dies geschieht vorteilhafterweise durch eine Eingabe eines Benutzers in das Benutzer-Endgerät. Anschließend erfolgt bevorzugt eine Regelung, mit der eine aktuelle Lage der Plattform in die Ziellage überführt wird. Dazu werden die folgenden Schritte wiederholt ausgeführt. Zunächst werden Signale eines Lagesensors durch das Benutzer-Endgerät erfasst, wobei der Lagersensor bevorzugt der erste Lagersensor und/oder der zweite Lagersensor ist. Somit stehen dem Benutzer-Endgerät Informationen über die aktuelle Lage des Fahrzeugs zur Verfügung. Insbesondere durch einen Vergleich der aktuellen Lage mit der Ziellage werden anschließend durch das Benutzer-Endgerät Steuersignale für das Antriebssystem berechnet, durch die eine Stütze der Plattform bewegbar ist. Insbesondere ist die Stütze durch die Steuersignale derart bewegbar, dass die Ziellage des Fahrzeugs erreicht wird. Bevorzugt ist außerdem vorgesehen, dass mehrere Stützen mit je einem eigenen Antriebssystem vorhanden sind, so dass durch das Benutzer-Endgerät Steuersignale für jedes Antriebssystem jeder Stütze berechnet werden. Somit wird sämtliche für die Ansteuerung des Antriebssystems benötigte Rechenleistung durch das Benutzer-Endgerät bereitgestellt. Die berechneten Steuersignale werden anschließend an das Steuergerät ausgegeben. Somit dient das Steuergerät lediglich dem Aktivieren und/oder Deaktivieren des Antriebssystems durch Verbinden und/oder Trennen der Energieversorgung gemäß den von dem Benutzer-Endgerät bereitgestellten Steuersignalen. Daher kann eine Rechenkapazität des Steuergeräts sehr gering gewählt werden. Außerdem ermöglicht das Verfahren, die Plattform beliebig nach den Wünschen eines Benutzers auszurichten. Insbesondere dann, wenn die Plattform ein Wohnwagen oder ein Wohnmobil ist, erlaubt das Verfahren eine horizontale Ausrichtung des Wohnwagens oder des Wohnmobils, was den Wohnkomfort erhöht.

Um zu vermeiden, dass ein unkontrollierter Betrieb des Antriebssystems erfolgt, ist vorgesehen, dass das Steuergerät die Energieversorgung von dem Antriebssystem trennt und/oder das Antriebssystem in einen Sicherheitszustand überführt, wenn keine Verbindung des Benutzer-Endgeräts mit dem Steuergerät vorliegt. Auf diese Weise ist stets sichergestellt, dass die Rechenlogik des Benutzer-Endgeräts zur Verfügung steht, wenn das Antriebssystem betrieben wird. Sobald die Rechenlogik nicht mehr zur Verfügung steht, insbesondere weil das Benutzer-Endgerät von dem Steuergerät getrennt wurde, ist ein Betrieb des Antriebssystems gestoppt.

Schließlich betrifft die Erfindung ein Computerprogrammprodukt. Das Computerprogrammprodukt umfasst Programmcode zur Durchführung des zuvor beschriebenen Verfahrens, wenn das Computerprogrammprodukt auf einer Rechenvorrichtung abläuft. Unter Rechenvorrichtung ist hier insbesondere ein Computer oder ein Mikrochip, bevorzugt auch ein Smartphone zu verstehen.

In einer besonders vorteilhaften Ausführungsform ist das Steuergerät in zwei Komponenten aufgeteilt, wobei ein Benutzer-Endgerät aus dem Steuergerät ausgelagert ist. Somit weist das Steuergerät zumindest eine erste Schnittstelle und zumindest eine zweite Schnittstelle auf. Die erste Schnittstelle ist bevorzugt mit dem elektrischen Antriebssystem, insbesondere mit dem elektrischen Antriebssystem einer Plattform, verbindbar. Das Antriebssystem dient bevorzugt einer Bewegung der Plattform und/oder einer Ausrichtung der Plattform relativ zu einem Untergrund der Plattform. Dabei ist vorteilhafterweise vorgesehen, dass die erste Schnittstelle eingerichtet ist, das elektrische Antriebssystem mit einer Energieversorgung zu verbinden und/oder das elektrische Antriebssystem von der Energieversorgung zu trennen. Bevorzugt ist die erste Schnittstelle eingerichtet, das Antriebssystem gerichtet mit der Energieversorgung zu verbinden, so dass eine Antriebsrichtung einstellbar ist. Besonders bevorzugt ist die Antriebsvorrichtung ein Rotationsmotor, so dass dessen Drehrichtung durch gerichtetes Verbinden mit der Energieversorgung einstellbar ist. Weiterhin ist vorteilhafterweise vorgesehen, dass die erste Schnittstelle eingerichtet ist, eine Leistungsaufnahme des Antriebssystems zu erfassen. Die zweite Schnittstelle ist mit der ersten Schnittstelle zum Datenaustausch verbunden. Außerdem ist die zweite Schnittstelle bevorzugt mit einem Benutzer-Endgerät verbindbar, wobei die erfasste Leistungsaufnahme über die zweite Schnittstelle an das Benutzer-Endgerät übertragbar ist und Steuersignale zum Ansteuern des Antriebssystems von dem Benutzer-Endgerät an die zweite Schnittstelle übertragbar sind. Die Verbindung zwischen der zweiten Schnittstelle und dem Benutzer-Endgerät ist bevorzugt eine drahtlose Verbindung. Durch die zweite Schnittstelle wird insbesondere ermöglicht, dass eine Rückkopplung über das Benutzer-Endgerät erzeugt wird. Über das Benutzer-Endgerät ist somit das Antriebssystem in Abhängigkeit von der erfassten Leistungsaufnahme ansteuerbar. Eine Rückkopplung oder ein geschlossener Regelkreis liegt in dem Steuergerät selbst bevorzugt nicht vor. Somit ist ein sehr einfacher Aufbau des Steuergeräts sichergestellt, da dessen einzige Aufgabe das Empfangen oder Erfassen und Weiterleiten von Signalen ist.

Dazu ist besonders bevorzugt ein Benutzer-Endgerät zur Verbindung mit dem zuvor beschriebenen Steuergerät vorgesehen. Das Benutzer-Endgerät ist vorteilhafterweise eingerichtet, von dem Steuergerät Signale über die aufgenommene Leistung des Antriebssystems zu erhalten. Außerdem ist das Benutzer-Endgerät eingerichtet, basierend auf den empfangen Signalen über die aufgenommene Leistung Steuersignale für das Antriebssystem zu berechnen. Die Steuersignale sind schließlich an die zweite Schnittstelle des Steuergeräts ausgebbar. Somit wird insbesondere erreicht, dass nahezu sämtliche erforderliche Rechenleistung durch das Benutzer-Endgerät bereitgestellt wird. Das Benutzer-Endgerät bildet daher eine Rückkopplung, so dass das Antriebssystem sehr sicher und zuverlässig betreibbar ist.

Für den Fall, dass das Benutzer-Endgerät aus dem Steuergerät ausgelagert ist, ist bevorzugt eine Verbindung zwischen Benutzer-Endgerät und zweiter Schnittstelle eine drahtlose Verbindung. Auf diese Weise ist ein Verbinden von Benutzer-Endgerät und Schnittstelle sehr einfach und flexibel möglich.

Weiterhin weist das Steuergerät bevorzugt zumindest einen ersten Lagesensor auf, wobei Signale des ersten Lagesensors über die zweite Schnittstelle an das Benutzer-Endgerät übertragbar sind. Somit stehen dem Benutzer-Endgerät vorteilhafterweise Daten über eine aktuelle Lage der Plattform zur Verfügung. Der erste Lagesensor ist bevorzugt durch zumindest einen Beschleunigungssensor realisiert. Unter Lage ist hier insbesondere der Grad eines Verkippens einer Bodenebene der Plattform aus einer horizontalen Ebene zu verstehen.

Alternativ oder zusätzlich ist bevorzugt vorgesehen, dass das Benutzer-Endgerät einen zweiten Lagesensor aufweist. Der zweite Lagesensor stellt dem Benutzer-Endgerät Daten über eine aktuelle Lage des Benutzer-Endgeräts zur Verfügung.

Somit sind bevorzugt zumindest drei Möglichkeiten vorhanden, eine aktuelle Lage der Plattform innerhalb des Benutzer-Endgeräts bereitzustellen: In einer ersten Möglichkeit wird vorteilhafterweise der zweite Lagesensor des Benutzer-Endgerätes genutzt um die Lage der Plattform zu ermitteln. Dazu wird das Benutzer-Endgerät, insbesondere flach, auf einen Tisch oder einen Boden der Plattform gelegt. Zusätzliche Sensoren in dem Steuergerät sind vorteilhafterweise nicht notwendig.

In einer zweiten Möglichkeit weist das Steuergerät einen ersten Lagesensor auf. Dazu wird zumindest ein, bevorzugt vorkalibrierter, Sensor in dem Steuergerät verbaut oder das Steuergerät wird vor einer erstmaligen Inbetriebnahme kalibriert. Dies macht es möglich auch ein Benutzer-Endgerät ohne integrierten zweiten Lagesensor zu verwenden oder das Benutzer-Endgerät von außerhalb der Plattform zur Ansteuerung des Antriebssystems zu verwenden. Das Steuergerät ist bevorzugt lagegenau in der Plattform eingebaut und vorab, idealerweise bereits im Werk, kalibriert. Alternativ dazu kann die Kalibrierung des/der Lagesensors/-sensoren durch manuelle Eingabe am Benutzerendgerät vorgenommen werden.

Als dritte Möglichkeit ist vorteilhafterweise vorgesehen, dass der zweite Lagesensor des Benutzer-Endgeräts den in der Steuerung vorhandenen ersten Lagesensor kalibriert. Diese Möglichkeit verbindet die Vorteile der beiden vorhergehenden Varianten: Grundsätzlich wird der in der Steuerung verbaute erste Lagesensor verwendet. Dieser wird mithilfe des zweiten Lagesensors des Benutzer-Endgeräts kalibriert. Die Kalibrierung wird bevorzugt im Steuergerät abgespeichert. Dies ermöglicht eine weitere Verwendung mit einem Benutzer-Endgerät ohne zweiten Lagesensor, wobei das Steuergerät vorteilhafterweise lediglich fest, aber nicht lagegenau montiert werden muss. Sollte ein Benutzer-Endgerät mit zweitem Lagesensor zur Verfügung stehen, so ist die Kalibrierung vorteilhafterweise wiederholbar.

Das Steuergerät ist außerdem vorteilhafterweise eingerichtet, die Antriebsvorrichtung zu deaktivieren, wenn das Benutzer-Endgerät nicht verbunden ist. Das Deaktivieren erfolgt durch eine Trennung des Antriebssystems von der Energieversorgung. Insbesondere ist dazu vorgesehen, dass das Antriebssystem in einen sicheren Zustand überführt wird. Da erfindungsgemäß vorgesehen ist, dass das Steuergerät selbst lediglich als globale Schnittstelle zwischen Antriebssystem und Benutzer-Endgerät dient, muss stets sichergestellt sein, dass ein Benutzer-Endgerät verbunden ist. Sollte dies nicht der Fall sein, so besteht die Gefahr, dass das Antriebssystem unkontrolliert wird, was zu einer Beschädigung der Plattform und/oder einer angetriebenen Stütze und/oder des Antriebssystems selbst führen kann. Somit ist durch die vorteilhafte Weiterbildung ein sicherer Betrieb möglich, da im Falle eines Verbindungsabbruchs zwischen Steuergerät und Benutzer-Endgerät ein Stoppen der Antriebsvorrichtung erfolgt.

Die Plattform ist insbesondere ein Fahrzeug oder einen Wohnwagen und umfasst bevorzugt zumindest vier ausfahrbare Stützen. Das zuvor beschriebene Steuergerät ist bevorzugt mit Antriebssystemen der Stützen verbunden. Durch ein Antriebssystem ist bevorzugt eine Stütze bewegbar, insbesondere einfahrbar und/oder ausfahrbar. Die vier Stützen sind insbesondere in Eckbereichen des Fahrzeugs angebracht, so dass durch die Stützen das erfindungsgemäße Fahrzeug sehr einfach und flexibel ausgerichtet, vorzugsweise nivelliert, werden kann. Die Plattform ist alternativ bevorzugt ein mobiler Messestand, ein Anhänger, ein Vermessungsfahrzeug ein Sendefahrzeug, ein Einsatzfahrzeug mit einem Kranaufbau, ein mobiles Bühnenelement, ein Eventfahrzeug oder ein Bühnenfahrzeug.

Die Stützen sind bevorzugt Ausdrehstützen, die einen Gewindetrieb aufweisen. Alternativ sind die Stützen durch Elektrozylinder ausfahrbar oder weisen ein Hydrauliksystem auf, mit dem die Stützen bewegbar sind. Alle diese Stützen haben gemeinsam, dass ein Antriebssystem vorhanden ist, das mit dem erfindungsgemäßen Steuergerät, Benutzer-Endgerät und/oder mit den erfindungsgemäßen Verfahren steuerbar und regelbar ist.

Das Benutzer-Endgerät ist bevorzugt eingerichtet, das Antriebssystem bei Überschreiten eines vordefinierten Werts der Leistungsaufnahme zu deaktivieren. Auf diese Weise wird bevorzugt verhindert, dass eine Überbelastung des Antriebssystems stattfindet, so dass das Antriebssystem vor Beschädigungen geschützt ist.

Bevorzugt ist das Benutzer-Endgerät ein Smartphone oder ein Tablet. Smartphones oder Tablets verfügen über eine ausreichende Rechenleistung, um die erfindungsgemäßen Aufgaben als Benutzer-Endgerät zu erfüllen. Außerdem sind Smartphones oder Tablets leicht mit anderen Geräten, wie insbesondere dem Steuergerät, verbindbar, wozu vorteilhafterweise ein passender Bluetooth-Standard verwendbar ist.

Die Erfindung wird nun anhand von Ausführungsbeispielen unter Berücksichtigung der beigefügten Zeichnungen weiter erläutert. Dabei zeigen:
- Figur 1: eine schematische Ansicht eines Benutzer-Endgeräts sowie einer Plattform umfassend ein Steuergerät gemäß einem Ausführungsbeispiel der Erfindung,
- Figur 2: eine schematische Ansicht des Steuergeräts gemäß dem Ausführungsbeispiel der Erfindung,
- Figur 3: eine schematische Ansicht des Benutzer-Endgeräts, das mit dem Steuergerät gemäß dem Ausführungsbeispiel der Erfindung verbindbar ist,
- Figur 4: ein schematischer Ablauf eines Einfahrvorgangs und eines Ausfahrvorgangs einer Stütze bei Verwendung des Verfahrens gemäß einem Ausführungsbeispiel der Erfindung,
- Figur 5: ein schematischer Ablauf eines Einfahrvorgangs und eines fehlerhaften Einfahrvorgangs einer Stütze gemäß dem Stand der Technik,
- Figur 6: ein schematischer Ablauf eines Einfahrvorgangs, eines fehlerhaften Einfahrvorgangs und eines Ausfahrvorgangs einer Stütze bei Verwendung des Verfahrens gemäß dem Ausführungsbeispiel der Erfindung, und
- Figur 7: ein schematischer Ablauf eines Einfahrvorgangs und eines fehlerhaften Einfahrvorgangs mit jeweils anschließendem Ausfahrvorgang einer Stütze bei Verwendung des Verfahrens gemäß dem Ausführungsbeispiel der Erfindung.

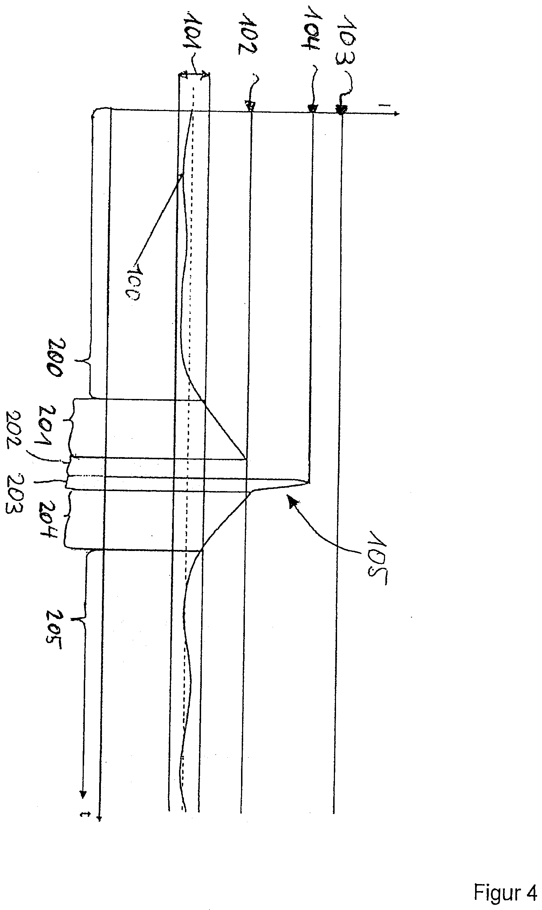

In den Ausführungsbeispielen wird stets Bezug auf einen Anwendungsfall der Erfindung genommen, die Nivellierung von Wohnwagen. Die Erfindung kann jedoch auf jede Art von Antrieben angewandt werden. Insbesondere ist erkennbar, dass die Endlagenregelung, die in den Figuren 4 bis 7 erklärt ist, nicht auf den skizzierten Anwendungsfall der Nivellierung beschränkt ist. Auch ist der nachfolgend erläuterte Aufbau von Steuergerät 1 und Benutzer-Endgerät 5 nicht Teil der Erfindung und wird lediglich zum besseren Verständnis der Funktionsweise des Steuergeräts 1 sowie des Ablaufs des erfindungsgemäßen Verfahrens erläutert.

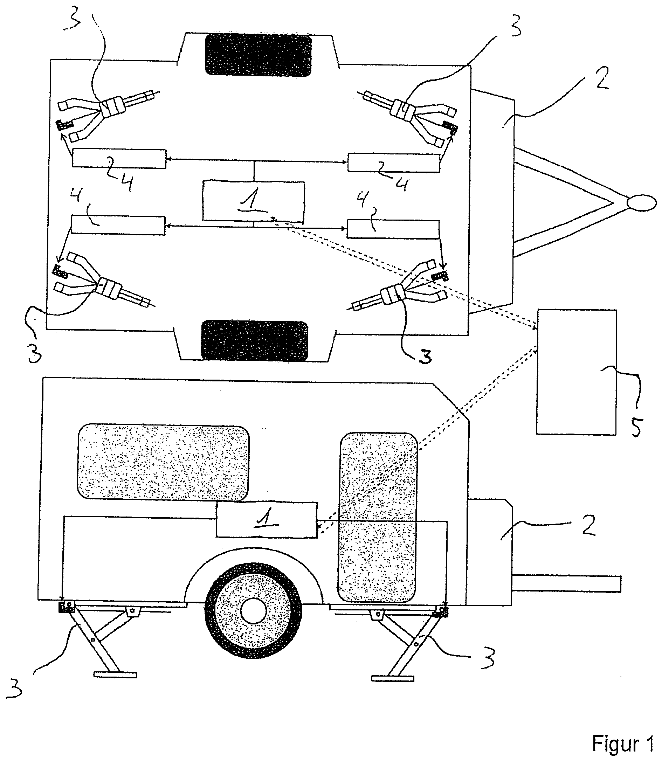

Figur 1 zeigt ein Steuergerät 1 gemäß einem Ausführungsbeispiel der Erfindung, das in einem Fahrzeug angeordnet ist, wobei das Fahrzeug die Plattform 2 bildet. Die Plattform 2 ist in dem in Figur 1 gezeigten Beispiel als Wohnwagen ausgeführt. Die Plattform 2 weist vier Stützen 3 auf, die in jeweils einer Ecke der Plattform 2 angeordnet sind. Jede Stütze 3 wird von einem Antriebssystem 4 angetrieben, wobei die Antriebssysteme 4 mit dem Steuergerät 1 verbunden sind, so dass elektrische Leistung von dem Steuergerät 1 an die Antriebssysteme 4 übertragbar ist. Jedes Antriebssystem 4 umfasst bevorzugt einen Elektromotor.

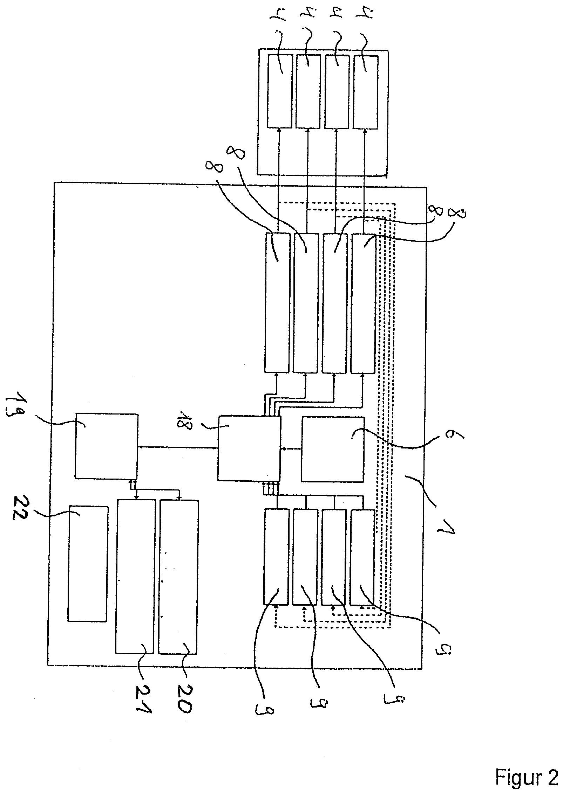

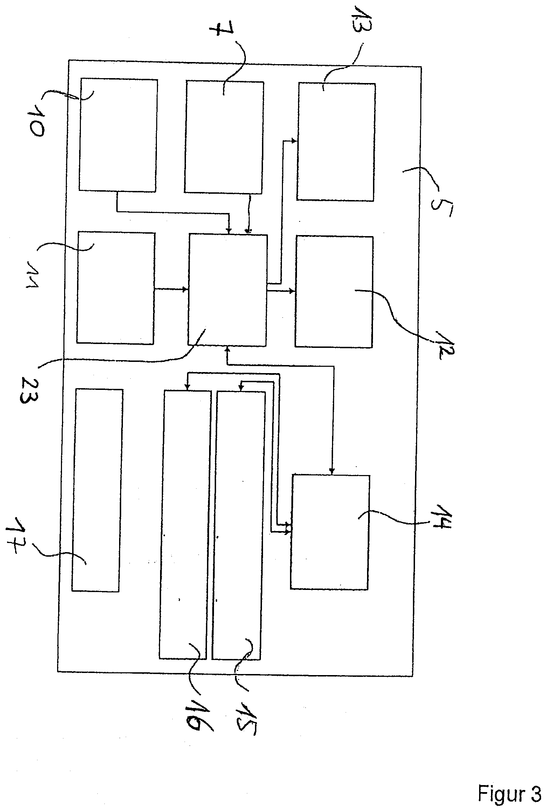

Weiterhin ist ein Benutzer-Endgerät 5, das insbesondere eine Smartphone oder ein Tablet ist, mit dem Steuergerät 1 verbindbar. Die Verbindung zwischen Benutzer-Endgerät 5 und Steuergerät 1 ist bevorzugt eine drahtlose Verbindung, insbesondere eine Drahtlosverbindung nach einem Bluetooth-Standard. Alternativ ist vorgesehen, dass das Benutzer-Endgerät 5 in das Steuergerät 1 integriert ist. Somit steht einem Benutzer die Möglichkeit zur Verfügung, ein Ausfahren und/oder Einfahren der Stützen 3 über das Benutzer-Endgerät 5 zur steuern. Insbesondere ist vorgesehen, dass eine vollautomatische Nivellierung stattfindet, wobei die Plattform 2 durch Ausfahren der einzelnen Stützen 3 derart ausgerichtet wird, dass ein Boden der Plattform 2 eine horizontale Lage einnimmt. Für eine derartige Nivellierung wird ein erster Lagesensor 6 (vgl. Figur 2) des Steuergeräts 1 und/oder ein zweiter Lagesensor 7 (vgl. Figur 3) des Benutzer-Endgeräts 5 verwendet.

Figur 2 zeigt eine schematische Abbildung des Steuergeräts 1. Das Steuergerät 1 umfasst einen Micro-Kontroller 18 als eine zentrale Einheit. Mit dem Micro-Controller 18 sind vier Transistorschaltungen verbunden, die jeweils eine H-Brücke 8 bilden. Die H-Brücken 8 sind mit den Antriebssystemen 4 der Stützen 3 verbindbar, so dass die Antriebssysteme 4 durch geeignetes Ansteuern der mit einer Energieversorgung verbundenen H-Brücken 8 mit Strom versorgbar sind. Um eine Leistungsaufnahme der Antriebssysteme 4 zu bestimmen, sind Stromsensoren 9 sowohl mit den H-Brücken 8 als auch mit dem Micro-Controller 18 verbunden. Da die Antriebssysteme 4 mit einer konstanten oder annähernd konstanten elektrischen Spannung betrieben werden, ist somit mit den Stromsensoren 9 direkt ein Maß für die Leistungsaufnahme der Antriebssysteme erfassbar.

Weiterhin ist der erste Lagesensor 6 mit dem Micro-Controller 18 verbunden, um Daten über eine aktuelle Lage der Plattform 2 zu übertragen. Schließlich ist ein Bluetooth-Chip 19 des Steuergeräts 1 mit dem Micro-Controller 18 verbunden, wobei insbesondere vorgesehen ist, dass das Benutzer-Endgerät 5 über den Bluetooth-Chip 19 des Steuergeräts 1 mit dem Steuergerät 1 verbindbar ist. Der Bluetooth-Chip 19 des Steuergeräts 1 wiederum ist mit einem ersten Bluetooth-Kennnummernspeicher 20 und mit einem zweiten Bluetooth-Kennnummernspeicher 21 verbunden.

Eine Stromversorgung 22 dient der Versorgung sämtlicher Komponenten des Steuergeräts 1 mit elektrischer Energie. Die Stromversorgung 22 ist insbesondere ein Spannungswandler, der eine üblicherweise in Fahrzeugen verwendete Spannung von 10V bis 14V auf 5V wandelt. Die Energieversorgung, die mit den H-Brücken verbunden ist, ist vorteilhafterweise von der Stromversorgung 22 getrennt ausgeführt.

Figur 3 zeigt eine schematische Abbildung des Benutzer-Endgeräts 5. Dieses umfasst einen zentralen Steuerchip 23, der mit einem Touchscreen 10, einer Tastatur 11, einem Display 12, einem Lautsprecher 13, dem zweiten Lagesensor 7 und einem Bluetooth-Chip 14 verbunden ist. Der Bluetooth-Chip 14 wiederum ist mit einem ersten Bluetooth-Kennnummernspeicher 15 und mit einem zweiten Bluetooth-Kennnummernspeicher 16 verbunden. Durch den Bluetooth-Chip 14 ist das Benutzer-Endgerät 5 insbesondere mit dem Steuergerät 1 verbindbar. Eine Stromversorgung 17 ist in dem Benutzer-Endgerät vorhanden, um die beschriebenen Komponenten mit elektrischer Energie zu versorgen. Die Stromversorgung 17 ist insbesondere ein Akku.

Sollte das Benutzer-Endgerät 5 alternativ in das Steuergerät 5 integriert sein, so werden der Bluetooth-Chip 19, der erste Bluetooth-Kennnummernspeicher 20 und der zweite Bluetooth-Kennnummernspeicher 21 des Steuergeräts 1 durch das Benutzer-Endgerät 5 ohne Bluetooth-Chip 14, erstem Bluetooth-Kennnummernspeicher 15 und zweitem Bluetooth-Kennnummernspeicher 16 ersetzt, wobei der zentrale Steuerchip 23 direkt mit dem Micro-Controller 18 zum Signalaustausch verbunden ist.

Die in Figur 1 gezeigten Stützen 3 bauen bevorzugt auf einem Antrieb mit selbsthemmendem Bewegungsgewinde auf, was vielerlei Vorteile wie Sicherheit und geringe Komplexität mit sich bringt. Doch bekannte vollautomatische Systeme sind dadurch sehr teuer, da diese bis heute Endlagensensoren oder Schalter voraussetzen. Ansonsten ist es bekannten Systemen nicht möglich, eine Endlage der Stützen 3 zu erkennen.

Erfindungsgemäß wird durch eine Endlagenregelung das Verspannungsproblem in den Endlagen der Stützen 3 gelöst. Das Problem tritt bei allen selbsthemmenden Bewegungsgewinden auf: Fährt man mit einer Ausdrehstütze in eine Endlage, verspannt sich die Konstruktion, in Folge dessen erhöht sich die Zug-/Druckkraft am Bewegungsgewinde, das benötigte Antriebsmoment steigt und damit auch die benötigte Leistung, insbesondere der benötigte Strom, für den Antrieb. Um eine bestimmte Vorspannung in der Endlage zu erreichen, wird daher das Antriebssystem 4 bei Erreichen einer bestimmten Leistung, insbesondere eines bestimmten Stromes, abgeschaltet. Da eine dem Antriebssystem zugeführte Spannung meistens konstant ist, wird über den Strom eine Leistungsaufnahme des Antriebssystems 4 repräsentiert.

Soll die Stütze 3 nun aus der Endlage heraus bewegt werden, muss mit einem noch höheren benötigten Antriebsmoment gerechnet werden, da vorerst die Haftreibung und nicht mehr die Gleitreibung, unter der gleichen Vorspannung, überwunden werden muss. Der gleiche Effekt tritt auf, wenn eine Schraube gelöst werden soll. Das Anzugsmoment ist immer kleiner als das Losdrehmoment, auch "Slip-Stick-Effekt" genannt.

Bei ordentlicher Bedienung der Stütze 3 ist das nur ein kleines Problem. Voraussetzung, um die verspannte Stütze 3 wieder zu lösen, ist das rechtzeitige Ausschalten des Antriebssystems 4 beim Einfahren in die Endlage, denn dann lässt sich das Bewegungsgewinde auch aus dem Stillstand heraus mit der zur Verfügung stehenden Leistung wieder lösen. Es muss also gewährleistet sein, dass die Abschaltleistung beim Erreichen einer Endlage wesentlich geringer ist, als die benötigte Anfahrleistung beim Loslösen aus dem Stillstand.

Ein Problem tritt dann auf, wenn der Benutzer der Anlage fälschlicherweise einen Befehl zum Einfahren der Stützen 3 gibt, obwohl sich die Stützen 3 schon in eingefahrener Position befinden. Denn nun würde eine Regelung gemäß dem Stand der Technik mit der erlaubten Anfahrtsleistung die Stütze 3 unlösbar verspannen. Das Problem ist im Stand der Technik mittels zusätzlicher Sensoren und Taster gelöst.

Erfindungsgemäß ist es vorteilhafterweise vorgesehen, mit einer intelligenten Regelung zu gewährleisten, dass die Regelung, durch kleine gezielte Bewegungen der Stütze 3 erkennt, in welcher Endlage sich die Stütze 3 befindet. Dafür ist es notwendig die Stütze 3 zu lösen, also die vordefinierte Anfahrtsleistung kurz zur Verfügung zu stellen. Doch bereits mit dem Lösen wird die Leistungsaufnahme, insbesondere der aufgenommene Strom, gemessen. In der darauffolgenden Bewegung unterscheiden sich nun die Ströme zwischen Ausfahren und Einfahren in einer Endlage, wie es in den Figuren 4 bis 7 erkennbar ist. In den in Figuren 4 bis 7 gezeigten Diagrammen bezeichnet die Abszisse die Zeit, während die Ordinate eine von dem Antriebssystem 4 aufgenommene Leistung, insbesondere repräsentiert durch elektrischen Strom, zeigt.

Zunächst wird das in Figur 4 gezeigt Einfahren und Ausfahren der Stütze 3 beschrieben:
- Beim Bewegen der Stütze 3 in einem ersten Bereich 200 während eines unverspannten Zustands, d.h. während eines stationären Betriebs, schwankt die von dem Antriebssystem 4 aufgenommene Leistung 100 in einem bestimmten Toleranzbereich 101.
- Dazu gibt das Benutzer-Endgerät 5 dem Steuergerät 1 den Befehl, die Stütze 3 weiter einzufahren.
- Dabei sendet das Steuergerät 1 ständig den gemessenen Strom 100 an das Benutzer-Endgerät 5.
- In einem zweiten Bereich 201 tritt eine leichte Vorspannung der Stütze 3 ein, da sich diese einer Endlage nähert.
- Sobald eine Stütze 3 beginnt sich zu verspannen, steigt der Strom an der jeweiligen H-Brücke 8.
- Steuergerät 1 registriert die Stromsteigerung durch den Stromsensor 9 und sendet dem Benutzer-Endgerät 5 die entsprechenden Stromsignale.
- Ist eine vorbestimmte Abschaltleistung 102 erreicht, errechnet das Benutzer-Endgerät 5, den Prozess zu stoppen und überträgt entsprechende Steuersignale an das Steuergerät 1. Die Abschaltleistung 102 ist bevorzugt deutlich geringer als eine Maximalleistung 103 des Antriebssystems. Insbesondere ist eine Differenz zwischen Abschaltleistung 102 und Maximalleistung 103 größer als eine Leistungsspitze, die zum Überwinden einer Haftreibung des Antriebssystems 4 und der Stütze 3 zusätzlich benötigt wird.
- Das Benutzer-Endgerät 5 teilt somit dem Steuergerät 1 mit, den Strom für das Antriebssystem 4 abzuschalten und somit die Leistungsaufnahme des Antriebssystems 4 zu stoppen, wobei das Benutzer-Endgerät 5 den Prozess für jedes Antriebssystem 4 einzeln regelt.
- Die Leistungen 100 werden von den Stromsensoren 9 einzeln gemessen, von dem Steuergerät 1 registriert und dem Benutzer-Endgerät 5 weitergeleitet, da die H-Brücken 8 getrennt voneinander geschaltet sind.
- Mit dem Abschalten fällt die Leistung 100 jedes Antriebssystems 4 annähernd horizontal ab.
- Mit dem Abschließen des Einfahrprozesses folgt ein Pausenbereich 202, in dem das Benutzer-Endgerät 5 und das Steuergerät 1 gefahrlos getrennt werden können, wobei Benutzer-Endgerät 5 und Steuergerät 1 zum Ausfahren wieder verbunden sein müssen.
- Zum Ausfahren der Stützen 3 teilt der Benutzer dem Benutzer-Endgerät 5 mit, die Stützen 3 auszufahren. Dies geschieht insbesondere durch Bildschirmeingabe am Touchscreen 10 oder durch Verwendung der Tastatur 11.
- Das Benutzer-Endgerät 5 teilt dem Steuergerät 1 mit, die H-Brücken 8 zu schalten, damit die Antriebssysteme 4 die Stützen 3 ausfahren. Dabei steigt die durch den Stromsensor 9 gemessene Leistung 100 bis zu einer Loslöseleistung 104 an und ist somit höher als der Abschaltstrom 102. Auf diese Weise entsteht eine Leistungsspitze 105. Grund für die Leistungsspitze 105 ist die nun wirkende Haftreibung. Das Benutzer-Endgerät 5 muss dem Steuergerät 1 daher höhere Leistungsaufnahmen durch das Antriebssystem 4 erlauben.
- Nach einem ersten Spitzenbereich 203 ist die Haftreibung überwunden und die Leistung 100 fällt zunächst stark ab. Die Stützen 3 sind damit losgelöst.
- Nach dem starken Fall der Leistung 100 entspannen sich die Stützen 3 über den Lösungsbereich 204. Dabei sinkt die Leistung 100 weiter, jedoch weniger schnell als im ersten Spitzenbereich 203.
- Beim Bewegen der Stützen 3 in dem Ausfahrbereich in unverspanntem Zustand schwankt die Leistung in dem Toleranzbereich 101. Dazu gibt das Benutzer-Endgerät 5 dem Steuergerät 1 den Befehl, die Stützen 3 weiter auszufahren und das Steuergerät 1 sendet ständig die Stromstärkenmessungen an das Benutzer-Endgerät 5 weiter.

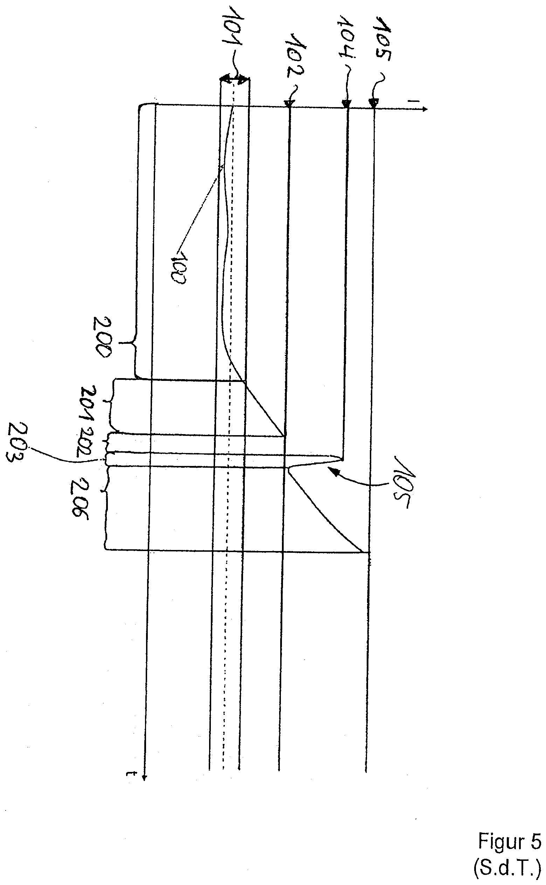

In Figur 5 ist ein Einfahren der Stütze 3 wie in Figur 4 gezeigt, wobei anschließend ein weiterer Einfahrvorgang gezeigt ist, der fehlerhafterweise initiiert wurde. Der in Figur 5 gezeigte Verlauf ist nicht Teil der Erfindung sondern bereits im Stand der Technik bekannt:
- Der erste Bereich 200, der zweite Bereich 201 und der erste Pausenbereich 202 sind identisch zu Figur 4.
- Der erste Unterschied zwischen dem normalen Einfahren und Ausfahren (Figur 4) und dem in Figur 5 gezeigten Verlauf zeichnet sich zwar anhand des Verlaufs der Leistung 100 erst nach dem ersten Spitzenbereich 203 ab, hat seine Ursache dennoch davor.
- Das Benutzer-Endgerät 5 und das Steuergerät müssen zum Ausfahren der Stütze nach dem Pausenbereich 202 wieder verbunden sein.
- Der Benutzer teilt dem Benutzer-Endgerät 5 zum Beispiel durch Bildschirmeingabe am Touchscreen 10 oder durch die Tastatur 11 fälschlicherweise mit, eine oder alle Stützen 3 erneut einzufahren. Grund dafür kann zum Beispiel sein, dass der Benutzer der Meinung ist, dass die Stützen 3 noch ausgefahren sind, oder er sich vertippt hat.
- Zum Loslösen muss das Benutzer-Endgerät 5 dem Steuergerät 1 wieder höhere Leistungsaufnahmen durch jedes Antriebssystem 4 erlauben, so dass die Leistung 100 im ersten Spitzenbereich 203 bis zur Loslöseleistung 104 ansteigt. Somit steigt die Leistung 100 im ersten Spitzenbereich 203 zunächst an und fällt danach sehr rasch ab.
- Nach dem Lösen beginnt eine erneute Verspannung innerhalb eines Verspannungsbereichs 206, da sich die Stützen 3 bereits in eingefahrenem und vorgespanntem Zustand befinden. Damit steigt auch die Leistung 100 an bis die Maximalleistung 103 erreicht ist. Bei Erreichen der Maximalleistung 103 wird der Vorgang durch das Benutzer-Endgerät 5 abgebrochen, da sich die Stütze 3 nicht mehr weiter bewegen kann.

Ein weiteres elektrisches Lösen ist bereits vor Erreichen der Maximalleistung 103 nicht mehr möglich, wenn die Abschaltleistung 102 nicht mindestens so gering ist, dass sich der Unterschied zwischen der höheren geforderten Leistung beim Loslösen und der niedrigeren geforderten Leistung unter Gleitreibung, also Bewegung, nicht mehr überwinden lässt, ohne die Maximalleistung im Anlauf zu überschreiten. Mit anderen Worten darf die auftretende Leistungsspitze 105 die Leistung 100 nicht über die Maximalleistung 103 heben. Somit können bei Geräten aus dem Stand der Technik Fälle auftreten, in denen die Stützen 3 so verspannt werden, dass sie durch die Antriebssysteme 4 nicht mehr lösbar sind.

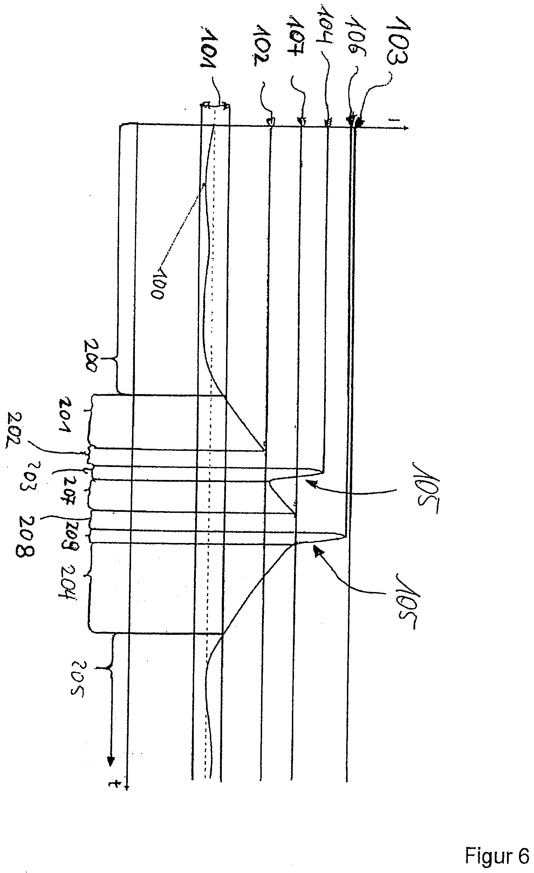

Um das Problem aus Figur 5 zu lösen, stellt das erfindungsgemäße Benutzer-Endgerät eine entsprechende Regelung zur Vermeidung solcher Situationen bereit. Dies ist in Figur 6 gezeigt:
- Der erste Bereich 200, der zweite Bereich 201 und der erste Pausenbereich 202 sind identisch zu Figur 4.
- Der erste Unterschied zwischen dem normalen Einfahren und Ausfahren (Figur 4) und dem in Figur 5 gezeigten Verlauf zeichnet sich zwar anhand des Verlaufs der Leistung 100 erst nach dem ersten Spitzenbereich 203 ab, hat seine Ursache dennoch davor.
- Das Benutzer-Endgerät 5 und das Steuergerät müssen zum Ausfahren der Stütze nach dem Pausenbereich 202 wieder verbunden sein.
- Der Benutzer teilt dem Benutzer-Endgerät 5 zum Beispiel durch Bildschirmeingabe am Touchscreen 10 oder durch die Tastatur 11 fälschlicherweise mit, eine oder alle Stützen 3 erneut einzufahren. Grund dafür kann zum Beispiel sein, dass der Benutzer der Meinung ist, dass die Stützen 3 noch ausgefahren sind, oder er sich vertippt hat.
- Zum Loslösen muss das Benutzer-Endgerät 5 dem Steuergerät 1 wieder höhere Ströme erlauben, so dass die Leistung 100 im ersten Spitzenbereich bis zur Loslöseleistung 104 ansteigt. Somit steigt die Leistung 100 im ersten Spitzenbereich 203 zunächst an und fällt danach sehr rasch ab. Es entsteht somit eine Leistungsspitze 105.
- Anders als bei dem in Figur 5 beschrieben Verfahren ohne erfindungsgemäße Endlagenregelung sendet das Steuergerät 1 nicht nur ständig die Messwerte der Leistungsaufnahme, die insbesondere mittels der Stromsensoren 9 erfasst wird, an das Benutzer-Endgerät 5, sondern das Benutzer-Endgerät 5 speichert diese Werte auch und weist den Werten Zeitpunkte oder zumindest eine Reihenfolge zu, um später darauf zurückgreifen zu können. Somit ist erfindungsgemäß vorgesehen, dass ein Verlauf der Leistungsaufnahme aufgenommen wird. Dieser Verlauf ist in Figur 5 beispielhaft dargestellt.
- Nach dem ersten Spitzenbereich 203 beginnt eine erneute Verspannung in einem Fehlerbereich 207, da sich die Stützen 3 bereits in eingefahrenem und vorgespanntem Zustand befinden.
- Das Steuergerät 1 sendet die Signale der Stromsensoren 9 weiterhin an das Benutzer-Endgerät 5.
- Durch den Vergleich mit den zuvor gespeicherten Werten und der zugewiesenen Zeitpunkte oder Reihenfolge, mit dem Ergebnis, dass die Werte erneut steigen, erkennt das Benutzer-Endgerät 5, dass die Stütze 3 weiter verspannt wird. Auch erkennt das Benutzer-Endgerät 5, dass die aktuelle Leistung 100 oberhalb der Abschaltleistung 102 liegt. Das Benutzer-Endgerät 5 erkennt daher, dass eine Abschaltbedingung vorliegt, wodurch der Fehlerbereich 207 identifizierbar ist.
- Aufgrund des Vorliegens der Abschaltbedingung entscheidet das Benutzer-Endgerät 5, den Strom erneut automatisch abzuschalten und befiehlt damit dem Steuergerät 1, den Strom von der jeweiligen H-Brücke 8 und damit zu dem jeweiligen Antriebssystem 4 zu unterbrechen.
- Dadurch steigt die Leistung 100 nur bis eine weitere Abschaltleistung 107 erreicht ist.
- Die weitere Abschaltleistung 107 kann entweder im Vorfeld bereits so definiert werden, dass sich mit der verbleibenden Leistungsreserve bis zur Maximalleistung 103 nochmals die Haftreibung aus dem Stillstand überwinden lässt, oder das Benutzer-Endgerät 5 definiert die jeweilige momentane Leistungsaufnahme bei Vorliegen der Abschaltbedingung aufgrund einer erneuten Verspannung als die Abschaltleistung 107 und befiehlt damit sofort nach Erkennen der erneuten Verspannung den Stopp der jeweiligen Stütze 3.
- Nachdem die Leistungsaufnahme für die Antriebssysteme 4 unterbunden ist, wird der Benutzer durch das Benutzer-Endgerät 5 darauf hingewiesen. Dies kann beispielsweise durch eine Anzeige am Display 10 des Benutzer-Endgeräts 5 geschehen, wo darauf hingewiesen wird, dass das System annimmt, dass sich die Stützen 3 bereits im eingefahrenen Zustand befinden, oder auch durch ein akustisches Signal über den Lautsprecher 13 des Benutzer-Endgeräts 5.
- Es können nun dem Benutzer zweckdienliche Schritte vorgeschlagen werden. Etwa: "Störung aufgetreten. Die Stützen erneut ausfahren?"
- Auch kann der Benutzer auf mögliche andere Fehler hingewiesen werden, die diese Fehlermeldung verursachen könnten, denn eine starke, auf einen bestimmten Bereich beschränkte Verschmutzung einer Spindel oder eine Verpolung eines Antriebssystems 4 während des ersten Pausenbereichs 202 können ähnliche oder gleiche Anstiege im Stromlaufdiagramm verursachen und damit auch die gleiche Fehlermeldung hervorrufen.
- Durch das rasche erneute Abschalten nach dem Fehlerbereich 207 entsteht ein zweiter Pausenbereich 208. Nach dem erneuten Einschalten des Antriebssystems 4 kann die Leistungsreserve bis zum Erreichen der Maximalleistung 103 genutzt werden, um während eines zweiten Spitzenbereichs 209 ein erneutes Lösen zu gewährleisten. Eine erneut auftretende Leistungsspitze 105 führt damit nicht zu einem Überschreiten der Maximalleistung 103.
- Das erneute Lösen während des zweiten Spitzenbereichs 209 geschieht ähnlich wie das erste Lösen während des ersten Spitzenbereichs 203, jedoch lässt das Benutzer-Endgerät 2 nun nochmals eine erhöhte Leistungsaufnahme zum Loslösen zu, so dass die Leistung 100 bis zu einer weiteren Loslöseleistung 106 ansteigt.
- Anschließend folgt die Entspannung der Stützen 3 während des Lösungsbereichs 204. Dieser ist aufgrund der zuvor stattgefundenen erneuten Verspannung länger als in Figur 4.
- Der Ausfahrbereich 205 ist identisch zu Figur 4. Hier verbleibt die Leistung 100 aufgrund des stationären Betriebs wieder innerhalb des Toleranzbereichs 101.

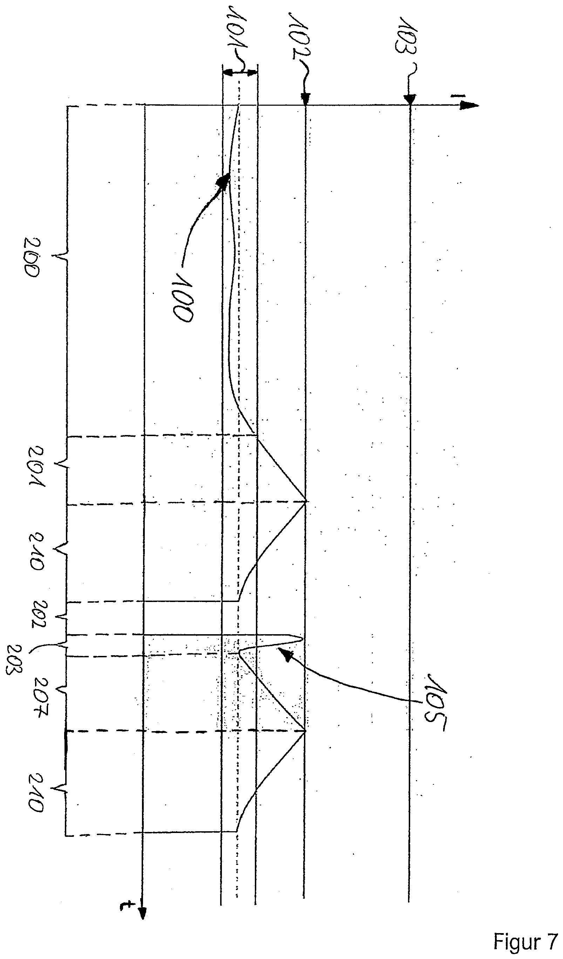

Um die mit Bezug auf Figur 5 dargestellten Nachteile noch vorteilhafter zu lösen, ist eine Rückführung auf ein bestimmtes Leistungsniveau vorgesehen. Insbesondere ist das Leistungsniveau zuvor vom Benutzer-Endgerät 5 berechnet worden, wobei das Leistungsniveau vorteilhafterweise innerhalb des Toleranzbereichs 101 liegt. Der Verlauf der Leistungsaufnahme für diesen Fall ist in Figur 7 dargestellt.

Der erste Bereich 200, der zweite Bereich 201 und der erste Pausenbereich 202, die in Figur 7 dargestellt sind, sind identisch zu den vorherigen Figuren. In dem in Figur 7 dargestellten Ausführungsbeispiel ist zusätzlich nach dem Vorliegen einer Abschaltbedingung ein Entspannungsbereich 210 vorgesehen. In diesem Bereich erfolgt ein invertierter Betrieb des Antriebssystems 4. Somit wird die von dem Antriebssystem 4 angetriebene Stütze 3 wieder in einen günstigen, mechanisch spannungsarmen oder spannungslosen Zustand zurückgeführt.

Nach Erreichen der Abschaltleistung 102 im zweiten Bereich 201 wird die Stütze 3 während des Entspannungsbereichs 210 so lange rückgeführt, bis die gemessene Leistung 100 wieder innerhalb des Toleranzbereichs 101 liegt. Auch kann man so gezielt etwas Restverspannung in der Konstruktion lassen damit die Stütze 3 beim Transport nicht vibrieren bzw. sich nicht leichter lockern kann. Mit anderen Worten wird nach Erreichen der Abschaltleistung 102 die Stütze 3 über einen vorher definierten Bereich in die entgegengesetzte Richtung bewegt. Damit entspannt sie sich wieder.

Der Entspannungsbereich 210 kann entweder zeitlich vordefiniert sein, sodass bei Vorliegen einer Abschaltbedingung das Antriebssystem 4 über einen vordefinierten Zeitraum invertiert betrieben wird, bevor das Antriebssystem 4 abgeschaltet wird. Alternativ kann der Entspannungsbereich 210 derart vordefiniert sein, dass das Antriebssystem 4 so lange invertiert betrieben wird, bis die Leistung 100 wieder innerhalb des Toleranzbereichs 101 liegt. Anstatt des Toleranzbereichs 101 kann auch eine andere vordefinierte Grenze gesetzt werden. Sobald die Leistung 100 den Toleranzbereich 101 oder die vordefinierte Grenze erreicht, wird das Antriebssystem 4 abgeschaltet.

Die Abläufe innerhalb des ersten Spitzenbereichs 203 und des Fehlerbereichs 207 sind identisch wie in Figur 6, wobei die Leistung 100 aufgrund des vorangegangenen Entspannungsbereichs 210 auf einem niedrigeren Niveau verbleibt, als dies in Figur 6 der Fall war. Ein Unterschied zeigt sich lediglich darin, dass eine Abschaltbedingung innerhalb des Fehlerbereichs 207 dadurch erfüllt wird, dass die Abschaltleistung 102 erreicht wird. Wiederum bleibt hierbei die auftretende Leistungsspitze 105 unberücksichtigt.

Durch das Vorliegen einer Abschaltbedingung innerhalb des Fehlerbereichs 207 schließt sich an diesen Bereich wiederum automatisch der Entspannungsbereich 210 an, bevor das Antriebssystem 4 abgeschaltet wird. Der Entspannungsbereich 210 ist hier identisch wie zuvor beschrieben.

Der Vorteil des Entspannungsbereichs 210 liegt darin, dass das Antriebssystem 4 beliebig oft fehlerhaft bedient werden kann, wobei die Gefahr einer unlösbaren Verspannung der Stütze 3 vermieden ist. Auch ist ersichtlich, dass in Figur 7 die Leistung 100, abgesehen von einer eventuell höher ausfallenden Leistungsspitze 105, nicht über die Abschaltleistung 102 hinausgeht, sodass das Antriebssystem 4 mit geringer Leistung betreibbar ist. Dies ist einerseits energiesparend, andererseits wird so das Antriebssystem 4 selbst geschont, wodurch eine lange Lebensdauer gewährleistet ist.

Der Einfachheit halber ist in Figur 7 nicht dargestellt, dass am Anfang des Entspannungsbereichs 210 eine kleine Leistungsspitze auftritt, die auf der Bewegungsumkehr des Antriebssystems 4 und der Stütze 3 basiert. So wird verdeutlicht, dass die Rückführung der Stütze 3 mittels invertierten Betriebs des Antriebssystems 4 unmittelbar nach dem Verspannen automatisch, also ohne weitere Interaktion des Benutzers, stattfindet.

Die in den Figuren 4, 6 und 7 beschriebenen Schritte des erfindungsgemäßen Verfahrens nehmen stets Bezug auf ein Ausführungsbeispiel, in dem Steuergerät 1 und Benutzer-Endgerät 5 getrennt sind. Alternativ können diese beiden Geräte auch in einem Gerät zusammengefasst sein, sodass keine Verbindung und Trennung der Verbindung zwischen Steuergerät 1 und Benutzer-Endgerät 5 erfolgt. Auch ist das erfindungsgemäße Verfahren nicht auf Spindeltriebe oder Stützen 3 beschränkt, sondern kann auf alle Kraftübertragungsvorrichtungen angewandt werden, die sich in einer Endlage verspannen.

Das Steuergerät 1 ist so programmiert, dass alle Ströme zu den Antriebsvorrichtungen 4 abgeschaltet werden, sollte die Verbindung, insbesondere die Funkverbindung, zum Benutzer-Endgerät 5 unterbrochen werden. Gleichzeitig wird der Benutzer über das Display 12 und/oder über ein akustisches Signal aus dem Lautsprecher 13 des Benutzer-Endgeräts 5 auf den Abbruch der Verbindung hingewiesen.

Auch wenn sich eine oder mehrere Stützen 3 bereits in einer Endlage befinden, wird hier die erfindungsgemäße Endlagenregelung Schäden durch Bedienungsfehler wie z.B. erneutes Einfahren vermeiden.

Weiterhin wird es dem Benutzer vorteilhaft möglich sein, ein Passwort festzulegen, das immer vor dem Aufrufen der Applikation abgefragt wird. Der Benutzer kann bevorzugt auch eine bestimmte Zeitdauer festlegen, nach der der Passwortschutz wieder aktiviert wird. Dies beugt ungewünschtem Bedienen durch dritte Personen, wie beispielsweise Kindern, am eigenen Gerät vor und verhindert auch ungewolltes Bedienen durch unabsichtliche Berührung des Touchscreens 10 oder der Tastatur 11.

Jedem Steuergerät ist am Bluetooth-Chip 14 ein Sicherheitscode zugewiesen. Dieser Code wird zum sogenannten "Pairing", dem Verbinden zweier Geräte via Bluetooth, benötigt. Der Bluetooth-Chip 14 fragt den Benutzer beim Pairing nach dem Code und nur nach richtiger Eingabe werden die beiden Geräte verbunden. Dies vermeidet unbefugtes Bedienen durch ein nicht autorisiertes Benutzer-Endgerät 5, das sich in Reichweite der Funkverbindung des Steuergeräts 1 befindet.

Der Benutzer hat die Möglichkeit, durch Eingabe am Benutzer-Endgerät 5 einen bestimmten Winkel längs oder quer zu einer Radachse der Plattform 2 zu definieren, nach dem sich die Plattform 2 ausrichten soll. Der Benutzer kann auch manuell durch anhaltendes Drücken von Tasten am Touchscreen 10 oder einer Taste der Tastatur 11 die Neigung zu verstellen. Dies soll dem Benutzer den Komfort, insbesondere beim Schlafen, erhöhen.

Für einen Reifenwechsel wird die Plattform 2 auf einer oder auf beiden Seiten gleichzeitig angehoben, bis eines oder mehrere, insbesondere alle, Räder den Boden nicht mehr berühren. Dieser Vorgang kann viel Leistung an den Antriebssystemen 4 benötigen, da im Vergleich zur reinen Nivellierung die Stützwirkung der Reifenachse zum Teil oder völlig verschwindet und die Stützen 3 die volle Last tragen müssen. Daher ist das Steuergerät 1 auf diese hohe Belastung ausgelegt.

Ein derartiges Anheben der Plattform 2 kann möglicherweise ein Durchbiegen der Trägerkonstruktion verursachen. Aus diesem Grund wird der Benutzer bevorzugt auf das mögliche Problem hingewiesen. Hierzu wird der Benutzer am Display 12 und/oder durch ein akustisches Signal aus dem Lautsprecher 13 aufgefordert, den Vorgang von außerhalb der Plattform 2 zu überwachen. Darüber hinaus muss der Benutzer bestätigen, den Hinweis gelesen und verstanden zu haben.

Auch ist vorteilhafterweise vorgesehen, ein weiteres Passwort oder einen weiteren Sicherheitscode einzugeben. Sollte das Steuergerät 1 und/oder die Antriebssysteme 4 an die technischen Grenzen stoßen und die Stromsensoren 9 zu hohe Ströme registrieren, so wird der Vorgang abgeschaltet und der Benutzer wiederum auf die aktuelle Situation hingewiesen.

Sollte speziell beim Anheben durch alle Stützen 3 der benötigte Gesamtstrom zu hoch ansteigen, so wird der Benutzer vorteilhafterweise darauf hingewiesen, den Wohnwagen nur einseitig anzuheben, um ein Reifenwechseln doch noch bewerkstelligen zu können.

Sollte, insbesondere nach einer Dachreinigung oder beim Abstellen der Plattform, Wasser am Dach zum Stehen kommen, so ist vorteilhafterweise vorgesehen, dass der Benutzer durch Auswählen einer Option an dem Benutzer-Endgerät 5 die Neigung in Längsrichtung der Plattform so einstellen kann, dass das Wasser problemlos abläuft.

Insbesondere bei der Anwendung der Erfindung für Gastronomiefahrzeuge, Verkaufsstandfahrzeuge und ähnlichem ist diese Funktion hilfreich. Darüber hinaus kann der Benutzer bevorzugt eine bestimmte Neigung vordefinieren und am Benutzer-Endgerät abspeichern.

Die zuvor beschriebenen Verfahrensschritte sind vorteilhafterweise in einem Computerprogrammprodukt implementiert, das auf dem Benutzer-Endgerät lauffähig ist.

Die Erfindung erlaubt es, dass ein bestehendes elektrisches aber nicht-vollautomatisches System genutzt werden kann, da lediglich das Steuergerät 1 und das Computerprogrammprodukt erworben werden muss. Insbesondere ist hier vorgesehen, dass das Benutzer-Endgerät 5 das Smartphone des Benutzers ist. Damit spart der Benutzer Kosten und schont durch Nutzung seines bestehenden Systems die Umwelt.

Anbieter von Stützen 3 können weiterhin ihre schon am Markt eingeführten und bewährten Stützen 3 unverändert oder mit ggf. optimierter Spindel, Getriebe und Motor verkaufen und dazu das beschriebene erfindungsgemäße System aus Steuergerät 1 und/oder Benutzer-Endgerät 5 und/oder Computerprogrammprodukt vergleichsweise preiswert anbieten. Das erfindungsgemäße System ist somit auch als Bausatz für vorhandene, ausfahrbare Stützen zum Nachrüsten möglich.

### Bezugszeichenliste

- 1: Steuergerät
- 2: Plattform
- 3: Stütze
- 4: Antriebssystem
- 5: Benutzer-Endgerät
- 6: erster Lagesensor
- 7: zweiter Lagesensor
- 8: Transistoren / H-Brücke
- 9: Stromsensor
- 10: Touchscreen
- 11: Tastatur
- 12: Display
- 13: Lautsprecher
- 14: Bluetooth-Chip des Benutzer-Endgeräts
- 15: erster Bluetooth-Kennnummernspeicher des Benutzer-Endgeräts
- 16: zweiter Bluetooth-Kennnummernspeicher des Benutzer-Endgeräts
- 17: Stromversorgung des Benutzer-Endgeräts
- 18: Micro-Controller
- 19: Bluetooth-Chip des Steuergeräts
- 20: erster Bluetooth-Kennnummernspeicher des Steuergeräts
- 21: zweiter Bluetooth-Kennnummernspeicher des Steuergeräts
- 22: Stromversorgung des Steuergeräts
- 23: zentraler Steuerchip des Benutzer-Endgeräts

- 100: Leistung
- 101: Toleranzbereich
- 102: Abschaltleistung
- 103: Maximalleistung
- 104: Loslöseleistung
- 105: Leistungsspitze
- 106: weitere Loslöseleistung
- 107: weitere Abschaltleistung
- 200: erster Bereich
- 201: zweiter Bereich
- 202: erster Pausenbereich
- 203: erster Spitzenbereich
- 204: Lösungsbereich
- 205: Ausfahrbereich
- 206: Verspannungsbereich
- 207: Fehlerbereich
- 208: zweiter Pausenbereich
- 209: zweiter Spitzenbereich
- 210: Entspannungsbereich

## Patentansprüche

1. Verfahren zum Ansteuern zumindest eines Antriebssystems (4), wobei mit dem Antriebssystem (4) ein in einer Endlage verspannbares Kraftübertragungssystem antreibbar ist, **gekennzeichnet durch** die Schritte:
- Erfassen einer Leistungsaufnahme des Antriebssystems (4) aus einer Energieversorgung, wobei die Leistungsaufnahme während eines stationären Betriebs des Antriebssystems (4) innerhalb eines Toleranzbereichs (101) liegt,
- Aufnehmen eines Verlaufs der erfassten Leistungsaufnahme des Antriebssystems (4) über eine Betriebszeit des Antriebssystems (4), und
- Trennen der Energieversorgung von dem Antriebssystem (4) wenn zumindest eine Abschaltbedingung erfüllt ist,
- wobei eine Abschaltbedingung erfüllt ist, wenn die Leistungsaufnahme einen Abschaltwertwert (102) erreicht oder überschreitet,
- wobei der Abschaltwert (102) unterhalb einer Maximalleistung (103) liegt, die das Antriebssystem (4) maximal aufnehmen kann, das Verfahren wird **dadurch** gekennzeichnet dass,
eine Differenz zwischen Abschaltwert (102) und Maximalleistung (103) größer als eine zum Überwinden der Haftreibung des Kraftübertragungssystems zusätzlich benötigte Leistungsspitze (105) ist.

2. Verfahren nach Anspruch 1, **dadurch gekennzeichnet, dass** eine Abschaltbedingung erfüllt ist, wenn aus dem Verlauf der erfassten Leistungsaufnahmen ein Anstieg der Leistungsaufnahme erkennbar ist und die Leistungsaufnahme über dem Abschaltwert (102) liegt.

3. Verfahren nach einem der vorhergehenden Ansprüche, **dadurch gekennzeichnet, dass** die Leistungsspitze in dem Verlauf erkannt wird, wenn innerhalb eines vordefinierten Zeitraums die Leistungsaufnahme ansteigt und unmittelbar darauf wieder abfällt, wobei die Leistungsspitze (105) für die Bestimmung, ob eine Abschaltbedingung vorliegt, unberücksichtigt bleibt.

4. Verfahren nach einem der vorhergehenden Ansprüche, **dadurch gekennzeichnet, dass** vor Trennen der Energieversorgung von dem Antriebssystem (4) bei Vorliegen einer Abschaltbedingung ein invertierter Betrieb des Antriebssystems (4) über einen vordefinierten Entspannungszeitraum erfolgt.

5. Verfahren nach einem der Ansprüche 1 bis 3, **dadurch gekennzeichnet, dass** vor Trennen der Energieversorgung von dem Antriebssystem (4) bei Vorliegen einer Abschaltbedingung ein invertierter Betrieb des Antriebssystems (4) erfolgt, bis die Leistungsaufnahme innerhalb des Toleranzbereichs (101) liegt.

6. Verfahren nach einem der vorhergehenden Ansprüche, **gekennzeichnet durch** die Schritte:
- Verbinden eines Benutzer-Endgeräts (5) mit einem Steuergerät (1), das mit dem Antriebssystem (4) verbunden ist, wobei **durch** das Steuergerät (1) die Energieversorgung mit dem Antriebssystem (4) verbindbar ist und/oder die Energieversorgung von dem Antriebssystem (4) trennbar ist,
- Ausgeben, insbesondere wiederholtes Ausgeben, zumindest eines Steuersignals für die Antriebsvorrichtung (4) von dem Benutzer-Endgerät (5) an das Steuergerät (1),
- Empfangen einer erfassten Leistungsaufnahme des Antriebssystems (4) **durch** das Benutzer-Endgerät (5), wobei die Leistungsaufnahme von dem Steuergerät (1) erfassbar und an das Benutzer-Endgerät übertragbar ist, und
- Erstellen des Verlaufs der Leistungsaufnahme **durch** das Benutzer-Endgerät (5) und Übertragung eines Steuersignals an das Steuergerät (1) zum Trennen der Energieversorgung von dem Antriebssystem (4), wenn zumindest eine Abschaltbedingung erfüllt ist.

7. Verfahren nach Anspruch 6, wobei mit dem Antriebssystem (4) zumindest eine ausfahrbare Stütze (3) einer Plattform (2) ausfahrbar und/oder einfahrbar ist, **gekennzeichnet durch** die Schritte:
- Bestimmen einer Ziellage der Plattform (2) relativ zu einem Untergrund der Plattform (2) **durch** das Benutzer-Endgerät (5), und
wiederholtes Ausführen der folgenden Schritte, bis die Ziellage mit einer aktuellen Lage der Plattform übereinstimmt:
- Erfassen von Signalen eines Lagesensors (6, 7) und Berechnen der aktuellen Lage der Plattform (2) **durch** das Benutzer-Endgerät (5) aus den erfassten Signalen,
- Berechnen von Steuersignalen für das Antriebssystem (4) **durch** das Benutzer-Endgerät (5), **durch** die eine **durch** das Antriebssystem (4) antreibbare Stütze (3) bewegbar ist,
- Ausgeben der Steuersignale an das Steuergerät (1).

8. Verfahren nach Anspruch 6 oder 7, **dadurch gekennzeichnet, dass** das Steuergerät (1) die Energieversorgung von dem Antriebssystem (4) trennt und/oder das Antriebssystem (4) in einen Sicherheitszustand überführt, wenn keine Verbindung des Benutzer-Endgeräts (5) mit dem Steuergerät (1) vorliegt.

9. Computerprogrammprodukt, umfassend Programmcode zur Durchführung eines Verfahrens nach einem der Ansprüche 1 bis 9, wenn das Computerprogrammprodukt auf einer Rechenvorrichtung abläuft.

10. Steuergerät (1) für ein Antriebssystem (4),
- wobei mit dem Antriebssystem (4) ein in einer Endlage verspannbares Kraftübertragungssystem antreibbar ist,
- wobei mit dem Steuergerät (1) eine Leistungsaufnahme des Antriebssystems (4) aus einer Energieversorgung erfassbar ist, die während eines stationären Betriebs des Antriebssystems (4) innerhalb eines Toleranzbereichs (101) liegt,
- wobei mit dem Steuergerät (1) ein Verlauf der erfassten Leistungsaufnahme des Antriebssystems (4) über eine Betriebszeit des Antriebssystems (4) aufnehmbar ist,
- wobei mit dem Steuergerät (1) die Energieversorgung von dem Antriebssystem (4) trennbar ist, wenn zumindest eine Abschaltbedingung erfüllt ist,
- wobei eine Abschaltbedingung erfüllt ist, wenn die Leistungsaufnahme einen Abschaltwertwert (102) erreicht oder überschreitet,
- wobei der Abschaltwert (102) unterhalb einer Maximalleistung (103) liegt, die das Antriebssystem (4) maximal aufnehmen kann, **dadurch gekennzeichnet, dass** eine Differenz zwischen Abschaltwert (102) und Maximalleistung (103) größer ist als eine zum Überwinden der Haftreibung des Antriebssystems (4) zusätzlich benötigte Leistungsspitze.

11. Steuergerät (1) nach Anspruch 10, **dadurch gekennzeichnet, dass** eine Abschaltbedingung erfüllt ist, wenn aus dem Verlauf der erfassten Leistungsaufnahmen ein Anstieg der Leistungsaufnahme erkennbar ist und die Leistungsaufnahme über dem Abschaltwert (102) liegt.

12. Steuergerät (1) nach einem der Ansprüche 10 oder 11, **dadurch gekennzeichnet, dass** die Leistungsspitze in dem Verlauf dadurch erkennbar ist, dass innerhalb eines vordefinierten Zeitraums die Leistungsaufnahme ansteigt und unmittelbar darauf wieder abfällt, wobei die Leistungsspitze für die Bestimmung, ob eine Abschaltbedingung vorliegt, unberücksichtigt bleibt.

13. Steuergerät (1) nach einem der Ansprüche 10 bis 12, **dadurch gekennzeichnet, dass** mit dem Steuergerät (1) vor Trennen der Energieversorgung von dem Antriebssystem (4) bei Vorliegen einer Abschaltbedingung ein invertierter Betrieb des Antriebssystems (4) über einen vordefinierten Entspannungszeitraum ausführbar ist.

14. Steuergerät (1) nach einem der Ansprüche 10 bis 13, **dadurch gekennzeichnet, dass** mit dem Steuergerät (1) vor Trennen der Energieversorgung von dem Antriebssystem (4) bei Vorliegen einer Abschaltbedingung ein invertierter Betrieb des Antriebssystems (4) ausführbar ist, bis die Leistungsaufnahme innerhalb des Toleranzbereichs (101) liegt.

15. Steuergerät (1), insbesondere nach einem der Ansprüche 10 bis 14, **dadurch gekennzeichnet, dass** mit dem Steuergerät (1) ein Verfahren nach einem der Ansprüche 1 bis 9 ausführbar ist.

## Claims

1. Method for controlling at least one drive system (4), wherein a force transmitting system that can be stressed in an end position can be driven by way of the drive system (4), said method **characterized by** the steps:
- ascertaining a power consumption of the drive system (4) from an energy supply, wherein the power consumption lies within a tolerance range (101) during a stationary operation of the drive system (4),
- recording a progression of the ascertained power consumption of the drive system (4) over an operating time period of the drive system (4) and
- disconnecting the energy supply from the drive system (4) if at least one switch-off condition is fulfilled,
- wherein a switch-off condition is fulfilled if the power consumption achieves or exceeds a switch-off value (102),
- wherein the switch-off value (102) lies below a maximum power (103) that the drive system (4) can maximal consume,
the method is **characterized in that**
a difference between the switch-off value (102) and the maximum power (103) is greater than a power peak (105) that is additionally required in order to overcome the adhesive friction of the force transmitting system.

2. Method according to Claim 1, **characterized in that** a switch-off condition is fulfilled if an increase in the power consumption can be recognized from the progression of the ascertained power consumption and the power consumption lies above the switch-off value (102).

3. Method according to any one of the preceding claims, **characterized in that** the power peak is identified in the progression if the power consumption increases within a predefined period of time and drops back immediately following said increase, wherein the power peak (105) is not taken into consideration for determining whether a switch-off condition is present.

4. Method according to any one of the preceding claims, **characterized in that** prior to disconnecting the energy supply from the drive system (4) in the presence of a switch-off condition an inverted operation of the drive system (4) is performed over a predefined stress-release period of time.

5. Method according to any one of Claims 1 to 3, **characterized in that** prior to disconnecting the energy supply from the drive system (4) in the presence of a switch-off condition the operation of the drive system (4) is inverted until the power consumption lies within the tolerance range (101).

6. Method according to any one of the preceding claims, **characterized by** the steps:
- connecting a consumer end device (5) to a control unit (1) that is connected to the drive system (4), wherein by means of the control unit (1) the energy supply can be connected to the drive system (4) and/or the energy supply can be disconnected from the drive system (4),
- outputting in particular repeatedly outputting at least one control signal for the drive apparatus (4) from the consumer end device (5) to the control unit (1),
- receiving an ascertained power consumption of the drive system (4) by means of the consumer end device (5), wherein the power consumption can be ascertained by the control unit (1) and can be transmitted to the consumer end device, and
- creating the progression of the power consumption by means of the consumer end device (5) and transmitting a control signal to the control unit (1) so as to disconnect the energy supply from the drive system (4) if at least one switch-off condition is fulfilled.

7. Method according to Claim 6, wherein it is possible by way of the drive system (4) to move outward and/or inward a movable support (3) of a platform (2), **characterized by** the steps:
- determining a target position of the platform (2) relative to a ground below the platform (2) by means of the consumer end device (5), and
repeatedly performing the following steps until the target position matches the prevailing position of the platform:
- ascertaining signals from a position sensor (6, 7) and calculating the prevailing position of the platform (2) by means of the consumer end device (5) from the ascertained signals,
- calculating control signals for the drive system (4) by means of the consumer end device (5) by means of which it is possible to move a support (3) that can be moved by means of the drive system (4),
- outputting the control signals to the control unit (1).

8. Method according to Claim 6 or 7, **characterized in that** the control unit (1) disconnects the energy supply from the drive system (4) and/or the drive system (4) is transferred into a safe state if the consumer end device (5) is not connected to the control unit (1).

9. Computer program product comprising a program code for implementing a method according to any one of Claims 1 to 9 if the computer program product is executed on a computing device.

10. Control unit (1) for a drive system (4),
- wherein a force transmitting system that can be prestressed in an end position can be driven by way of the drive system (4),
- wherein a power consumption of the drive system (4) from an energy supply can be ascertained by way of the control unit (1), said power consumption lying within a tolerance range (101) during a stationary operation of the drive system (4),
- wherein it is possible by way of the control unit (1) to record a progression of the ascertained power consumption of the drive system (4) over an operating time period of the drive system (4),
- wherein it is possible by way of the control unit (1) to disconnect the energy supply from the drive system (4) if at least one switch-off condition is fulfilled,
- wherein a switch-off condition is fulfilled if the power consumption achieves or exceeds a switch-off value (102),
- wherein the switch-off value (102) lies below a maximum power (103) that the drive system (4) can maximal consume,
**characterized in that**
a difference between the switch-off value (102) and the maximum power (103) is greater than a power peak that is additionally required in order to overcome the adhesive friction of the drive system (4).

11. Control unit (1) according to Claim 10, **characterized in that** a switch-off condition is fulfilled if an increase in the power consumption can be recognized from the progression of the ascertained power consumption and the power consumption lies above the switch-off value (102).

12. Control unit (1) according to any one of Claims 10 or 11, **characterized in that** the power peak can be recognized in the progression by virtue of the fact that the power consumption increases within a predefined period of time and drops back immediately following said increase, wherein the power peak is not taken into consideration for determining whether a switch-off condition is present.

13. Control unit (1) according to any one of Claims 10 to 12, **characterized in that** by way of the control unit (1) prior to disconnecting the energy supply from the drive system (4) in the presence of a switch-off condition an inverted operation of the drive system (4) can be performed over a predefined stress-release period of time.

14. Control unit (1) according to any one of Claims 10 to 13, **characterized in that** by way of the control unit (1) prior to disconnecting the energy supply from the drive system (4) in the presence of a switch-off condition the operation of the drive system (4) can be inverted until the power consumption lies within the tolerance range (101).

15. Control unit (1), in particular according to any one of Claims 10 to 14, **characterized in that** a method can be implemented according to any one of Claims 1 to 9 by way of the control unit (1).

## Revendications

1. Procédé servant à piloter au moins un système d'entraînement (4), dans lequel un système de transmission de force pouvant être assemblé par serrage dans une position finale peut être entraîné avec le système d'entraînement (4), **caractérisé par** les étapes suivantes consistant à:
- détecter une absorption de puissance du système d'entraînement (4) à partir d'une alimentation en énergie, dans lequel l'absorption de puissance se situe dans une plage de tolérance (101) au cours d'un fonctionnement stationnaire du système d'entraînement (4),
- enregistrer une courbe de l'absorption de puissance détectée du système d'entraînement (4) sur une période de fonctionnement du système d'entraînement (4), et
- débrancher l'alimentation en énergie du système d'entraînement (4) quand au moins une condition de mise hors service est remplie,
- dans lequel une condition de mise hors service est remplie quand l'absorption de puissance atteint ou dépasse une valeur de mise hors service (102),
- dans lequel la valeur de mise hors service (102) se situe sous une puissance maximale (103), que le système d'entraînement (4) peut enregistrer au maximum, le procédé est **caractérisé en ce que**
une différence entre la valeur de mise hors service (102) et la puissance maximale (103) est supérieure à une crête de puissance (105) requise en supplément afin de surmonter la friction par adhérence du système de transmission de force.

2. Procédé selon la revendication 1, **caractérisé en ce qu'**une condition de mise hors service est remplie quand une augmentation de l'absorption de puissance peut être identifiée à partir de la courbe des absorptions de puissance détectées et quand l'absorption de puissance se trouve au-dessus de la valeur de mise hors service (102).

3. Procédé selon l'une quelconque des revendications précédentes, **caractérisé en ce que** la crête de puissance est identifiée dans la courbe quand l'absorption de puissance augmente au sein d'une période prédéfinie et chute immédiatement après à nouveau, dans lequel la crête de puissance (105) n'est pas prise en compte en vue de déterminer si une condition de mise hors service est présente.

4. Procédé selon l'une quelconque des revendications précédentes, **caractérisé en ce qu'**un fonctionnement inversé du système d'entraînement (4) a lieu sur une période de détente prédéfinie avant le débranchement de l'alimentation en énergie du système d'entraînement (4) en présence d'une condition de mise hors service.

5. Procédé selon l'une quelconque des revendications 1 à 3, **caractérisé en ce qu'**un fonctionnement inversé du système d'entraînement (4) a lieu avant le débranchement de l'alimentation en énergie du système d'entraînement (4) en présence d'une condition de mise hors service jusqu'à ce que l'absorption de puissance se situe au sein de la plage de tolérance (101).

6. Procédé selon l'une quelconque des revendications précédentes, **caractérisé par** les étapes suivantes consistant à:
- raccorder un terminal d'utilisateur (5) à un appareil de commande (1), qui est raccordé au système d'entraînement (4), dans lequel l'alimentation en énergie peut être raccordée au système d'entraînement (4) par l'appareil de commande (1) et/ou l'alimentation en énergie peut être débranchée du système d'entraînement (4),
- délivrer depuis le terminal d'utilisateur (5) à l'appareil de commande (1), en particulier délivrer de manière répétée, au moins un signal de commande pour le dispositif d'entraînement (4),
- recevoir une absorption de puissance détectée du système d'entraînement (4) par le terminal d'utilisateur (5), dans lequel l'absorption de puissance peut être détectée par l'appareil de commande (1) et peut être transmise au terminal d'utilisateur, et
- établir la courbe de l'absorption de puissance par le terminal d'utilisateur (5) et transmettre un signal de commande à l'appareil de commande (1) afin de débrancher l'alimentation en énergie du système d'entraînement (4) quand au moins une condition de mise hors service est remplie.

7. Procédé selon la revendication 6, dans lequel au moins un support (3) pouvant être sorti d'une plate-forme (2) peut être sorti et/ou rentré avec le système d'entraînement (4), **caractérisé par** les étapes suivantes consistant à:
- déterminer une position de destination de la plate-forme (2) par rapport à une sous-structure de la plate-forme (2) par le terminal d'utilisateur (5), et
renouveler, jusqu'à ce que la position de destination coïncide avec une position instantanée de la plate-forme, la réalisation des étapes suivantes consistant à:
- détecter des signaux d'un capteur de position (6, 7) et calculer la position instantanée de la plate-forme (2) par le terminal d'utilisateur (5) à partir des signaux détectés,
- calculer des signaux de commande pour le système d'entraînement (4) par le terminal d'utilisateur (5), grâce auxquels un support (3) pouvant être entraîné par le système d'entraînement (4) peut être déplacé,
- délivrer à l'appareil de commande (1) les signaux de commande.

8. Procédé selon la revendication 6 ou 7, **caractérisé en ce que** l'appareil de commande (1) débranche l'alimentation en énergie du système d'entraînement (4) et/ou amène le système d'entraînement (4) dans un état de sécurité quand aucun raccordement du terminal d'utilisateur (5) à l'appareil de commande (1) n'est présent.

9. Produit de programme informatique, comprenant un code de programme servant à mettre en oeuvre un procédé selon l'une quelconque des revendications 1 à 9, quand le produit de programme information s'exécute sur un dispositif de calcul.

10. Appareil de commande (1) pour un système d'entraînement (4),
- dans lequel un système de transmission de force pouvant être assemblé par serrage dans une position finale peut être entraîné avec le système d'entraînement (4),
- dans lequel une absorption de puissance du système d'entraînement (4) à partir d'une alimentation en énergie peut être détectée avec l'appareil de commande (1), laquelle se situe, au cours d'un fonctionnement stationnaire du système d'entraînement (4), au sein d'une plage de tolérance (101),
- dans lequel une courbe de l'absorption de puissance détectée du système d'entraînement (4) peut être enregistrée sur une période de fonctionnement du système d'entraînement (4) avec l'appareil de commande (1),
- dans lequel l'alimentation en énergie peut être débranchée du système d'entraînement (4) avec l'appareil de commande (1) quand au moins une condition de mise hors service est remplie,
- dans lequel une condition de mise hors service est remplie quand l'absorption de puissance atteint ou dépasse une valeur de mise hors service (102),
- dans lequel la valeur de mise hors service (102) se situe sous une puissance maximale (103), que le système d'entraînement (4) peut enregistrer au maximum, **caractérisé en ce que**
une différence entre la valeur de mise hors service (102) et la puissance maximale (103) est supérieure à une crête de puissance requise en supplément afin de surmonter la friction par adhérence du système d'entraînement (4).

11. Appareil de commande (1) selon la revendication 10, **caractérisé en ce qu'**une condition de mise hors service est remplie quand une augmentation de l'absorption de puissance peut être identifiée à partir de la courbe des absorptions de puissance détectées et quand l'absorption de puissance se situe au-dessus de la valeur de mise hors service (102).

12. Appareil de commande (1) selon l'une quelconque des revendications 10 ou 11, **caractérisé en ce que** la crête de puissance est identifiée dans la courbe par le fait que l'absorption de puissance augmente au sein d'une période prédéfinie et chute immédiatement après à nouveau, dans lequel la crête de puissance n'est pas prise en compte en vue de déterminer si une condition de mise hors service est présente.

13. Appareil de commande (1) selon l'une quelconque des revendications 10 à 12, **caractérisé en ce qu'**un fonctionnement inversé du système d'entraînement (4) peut être réalisé sur une période de détente prédéfinie avec l'appareil de commande (1) avant le débranchement de l'alimentation en énergie du système d'entraînement (4), en présence d'une condition de mise hors service.

14. Appareil de commande (1) selon l'une quelconque des revendications 10 à 13, caractérisé en ce en ce qu'un fonctionnement inversé du système d'entraînement (4) peut être réalisé avec l'appareil de commande (1) avant le débranchement de l'alimentation en énergie du système d'entraînement (4) en présence d'une condition de mise hors service jusqu'à ce que l'absorption de puissance se situe au sein de la plage de tolérance (101).

15. Appareil de commande (1), en particulier selon l'une quelconque des revendications 10 à 14, **caractérisé en ce qu'**un procédé selon l'une quelconque des revendications 1 à 9 peut être réalisé avec l'appareil de commande (1).
